(19)

Europäisches
Patentamt
European
Patent Office
Office européen
des brevets

(11)  **EP 2 113 795 A1**

(12)  # EUROPEAN PATENT APPLICATION

(43) Date of publication:
**04.11.2009 Bulletin 2009/45**

(51) Int Cl.:
**G01V 5/10** *(2006.01)*

(21) Application number: **08155355.4**

(22) Date of filing: **29.04.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **ExxonMobil Upstream Research
Company
Houston, TX 77098-2189 (US)**

(72) Inventor: **The designation of the inventor has not
yet been filed**

(74) Representative: **Pols, Ronald Maarten
ExxonMobil Chemical Europe Inc.
IP Law Shared Services
P.O. Box 105
Hermeslaan 2
1831 Machelen (BE)**

(54)  **Volume Of Investigation Based Image Processing**

(57)    Systems and methods which provide accurate formation information regardless of formation and borehole geometry, including those associated with high angle and horizontal wells, are shown. In providing processing of logging or image data, such as may be provided by a density tool or other tool, according to embodiments, formation attributes or features (e.g., density and dip angle) are estimated using raw data provided by the tool. The foregoing estimations may thereafter be iteratively refined using effective volume of interest (EVOI) information. According to embodiments, depth boundaries of formation information provided by the tool are shifted as a function of azimuth for correct spatial positioning of formation features using EVOI information. Processing of formation attribute or feature data provided by embodiments may be used with respect to various tool configurations, including configurations with and without borehole standoff.

FIG. 1

EP 2 113 795 A1

**Description**

**TECHNICAL FIELD**

This present invention relates generally to processing image or logging information and, more particularly, to volume of investigation based image or logging processing.

**BACKGROUND**

In geological exploration it is desirable to obtain information regarding the various formations and structures which exist beneath the Earth's surface. Accordingly, various sensors, probes, and test equipment (collectively referred to as "tools") have been employed to determine geological strata, density, porosity, composition, etc. when searching for hydrocarbon reserves. For example, dual detector compensated density tools, wherein a gamma source and two corresponding detectors or sensors are used to collect geological data, have been widely used for hydrocarbon exploration since the 1980's.

Dual detector compensated density tools are often employed in logging while drilling (LWD) operations, so as to provide information regarding the geological structures without requiring removal of the drill stem. In operation, the dual detector compensated density tool is used to make measurements in a plurality of azimuthhally binned sectors (e.g., 16 binned sectors) to produce a density log providing a 360° view around the borehole.

In a LWD dual detector compensated density tool configuration, the source and detectors are located on the side wall of the drill collar to avoid attenuation of the gamma rays by the drill pipe. Thus, the source and detectors are disposed off-center, or on an eccentric, with respect to the center of the borehole.

Although density images acquired using the foregoing LWD dual detector compensated density tools can reveal sedimentary structure of formation penetrated by the borehole, the effect of formation (e.g., sediment bedding) and borehole geometry on density measurement has heretofore not been addressed. For example, many post-processing procedures used with respect to dual detector compensated density tools assume a one-dimensional variation of the formation density. The widely used $\Delta\rho$ density compensation technique assumes an infinitely thick formation, and hence assumes a one-dimensional radial variation. Similarly, the commonly used $\alpha$-processing technique, used for vertical resolution enhancement, assumes one-dimensional vertical variation.

Such one-dimensional assumptions have typically provided acceptable results with respect to vertical borehole geometries penetrating horizontal formation geometries (e.g., horizontal sediment beds). However, it has been discovered that such conventional density compensation post-processing procedures result in significant error, and the benefits resulting from $\alpha$-processing decrease, as the relative dip between the borehole and formation increase. For example, high angle and horizontal (HA/HZ) wells, and similarly wells penetrating sediment beds having an appreciable bed dip, experience errors in bulk density (RHOB) estimation and bed boundary detection. The eccentricity and azimuthal rotation while drilling of the LWD dual detector compensated density tools make the tool response difficult to interpret with regard to the borehole and formation, particularly in HA/HZ wells.

**SUMMARY**

The present invention is directed to systems and methods which provide accurate formation information regardless of formation and borehole geometry. Embodiments of the invention provide accurate correction with respect to high angle and horizontal (HA/HZ) wells, and other wells in which the angle between the normal of the formation plane (e.g., sediment bed) and borehole axis is other than zero (i.e., relative dip between borehole and formation), as well as conventional vertical wells present a perpendicular strike angle at the formation boundaries. Additionally, embodiments of the invention provide resolution enhancement with respect to wells having a high relative dip between borehole and formation as well as wells presenting a more perpendicular strike angle at the formation boundaries. The foregoing correction may be provided with respect to various well attributes or features, such as geological strata, density, porosity, composition, etc., as presented in well logging or image data.

Post-processing of data provided by a density tool, such as a logging while drilling (LWD) dual detector compensated density tool, is provided according to embodiments of the invention to accurately determine formation density and geometry. In providing post-processing of density tool data according to embodiments of the invention, formation density and dip angle are estimated using raw data provided by a density tool. The foregoing density and dip angle estimations are, preferably, thereafter iteratively refined using effective volume of interest (EVOI) information. For example, depth boundaries (e.g., measured depth (MD)) of formation information provided by a density tool are shifted as a function of azimuth for correct spatial positioning of formation features using the foregoing EVOI information. Such post-processing techniques, as implemented according to embodiments of the invention, provide accurate density and resolution enhancement (e.g., bed boundary dip angle) with respect to wells having a high relative dip between borehole and the normal of the formation plane as well as wells presenting a more perpendicular strike angle at the formation boundaries.

Post-processing of density tool data provided by embodiments of the invention may be used with respect to various tool configurations. For example, the foregoing post-processing techniques may be utilized to provide accurate density and resolution enhancement with respect to density tools wherein the tool's sensors are disposed against the borehole (i.e., no standoff is present). Likewise, the foregoing post-processing techniques, adapted to implement a standoff parameter (e.g., a density correction constant, $\Delta\rho c$), may be utilized to provide accurate density and resolution enhancement with respect to density tools wherein the tool's sensors are disposed away from the borehole (i.e., standoff is present).

In one general aspect, a method includes estimating a formation boundary depth from well log data, the well log data providing formation attribute data for a plurality of azimuth angles. The formation boundary depth is estimated for each of said azimuth angles. Effective volume of investigation information is analyzed to determine an effective depth of investigation ($\Delta D$) and an effective shift in height ($\Delta h$) of a formation boundary surface associated with said formation boundary depth. The formation boundary depth estimate is refined using at least one of the effective depth of investigation ($\Delta D$) and the effective shift in height ($\Delta h$).

Implementations of this aspect may include one or more of the following features. For example, the well log data used in estimating the formation boundary depth may include raw density log data. The raw density log data has not been corrected for formation boundary dip. The analyzing of effective volume of investigation information may include determining an effective volume of investigation value as a function of geometric factors and the well log data. The analyzing of effective volume of investigation information may include decomposing the effective volume of investigation information in terms of a radial depth of investigation, a vertical resolution, and an azimuthal aperture. The refining of the formation boundary depth estimate may include re-estimating the formation boundary depth from corrected well log data, the corrected well log data including the well log data having the at least one of the effective depth of investigation ($\Delta D$) and the effective shift in height ($\Delta h$) applied thereto.

A formation boundary dip angle may be estimated from the well log data, and the formation boundary dip angle estimate may be refined using at least one of the effective depth of investigation ($\Delta D$) and the effective shift in height ($\Delta h$). The refining of the formation boundary dip angle estimate may include re-estimating the formation boundary dip angle from corrected well log data, the corrected well log data comprising the well log data having the at least one of the effective depth of investigation ($\Delta D$) and the effective shift in height ($\Delta h$) applied thereto. A density correction constant ($\Delta\rho_c$) may be subtracted from the well log data prior to the analyzing the effective volume of investigation information. The density correction constant ($\Delta\rho_c$) may be added to corrected well log data prior to providing a final formation boundary depth estimate from the refined formation boundary depth estimate.

In another general aspect, a method includes estimating a formation boundary dip angle from well log data, the well log data providing formation attribute data for a plurality of azimuth angles. Effective volume of investigation information is analyzed to determine an effective depth of investigation ($\Delta D$) and an effective shift in height ($\Delta h$) of a formation boundary dip surface associated with said formation boundary dip angle. The formation boundary dip angle estimate is refined using at least one of the effective depth of investigation ($\Delta D$) and the effective shift in height ($\Delta h$).

Implementations of this aspect may include one or more of the following features.

For example, the well log data used in estimating the formation boundary dip angle may include raw density log data, wherein the raw density log data has not been corrected for formation boundary dip. The analyzing of effective volume of investigation information may include determining an effective volume of investigation value as a function of geometric factors and said well log data. The analyzing of effective volume of investigation information may include decomposing the effective volume of investigation information in terms of a radial depth of investigation, a vertical resolution, and an azimuthal aperture. The refining of the formation boundary dip angle estimate may include re-estimating the formation boundary dip angle from corrected well log data, the corrected well log data comprising the well log data having the at least one of the effective depth of investigation ($vD$) and the effective shift in height ($\Delta h$) applied thereto. A formation boundary depth may be estimated for each of the azimuth angles from the well log data, and the formation boundary depth estimate refined using at least one of the effective depth of investigation ($\Delta D$) and the effective shift in height ($\Delta h$). The refining of the formation boundary depth estimate may include re-estimating the formation boundary depth from corrected well log data, the corrected well log data comprising the well log data having the at least one of the effective depth of investigation ($\Delta D$) and the effective shift in height ($\Delta h$) applied thereto. A density correction constant ($\Delta\rho_c$) may be subtracted from the well log data prior to the analyzing of the effective volume of investigation information. The density correction constant ($\Delta\rho_c$) may be added to corrected well log data prior to providing a final formation boundary dip angle estimate from the refined formation boundary dip angle estimate.

In another general aspect, a computer program product having a computer readable medium storing computer executable code for well log data processing, the computer program product including code for determining an effective shift in height ($\Delta h$) of a formation boundary dip surface as represented by well log data, the effective shift in height ($\Delta h$) being determined using at least a portion of said well log data, and code for correcting at least one of a formation boundary dip angle and a formation boundary depth using the effective shift in height ($\Delta h$), wherein the formation boundary dip angle and the formation boundary depth are determined from the well log data.

Implementations of this aspect may include one or more of the following features.

For example, the effective shift in height ($\Delta h$) may be associated with an effective depth of investigation ($\Delta D$). The code for correcting the at least one of the formation boundary dip angle and the formation boundary depth include code for iteratively refining the at least one of the formation boundary dip angle and the formation boundary depth. The code for determining an effective shift in height ($\Delta h$) may include code for calculating the effective shift in height ($\Delta h$) using effective volume of investigation information. The effective volume of investigation information may include a radial depth of investigation. The effective volume of investigation information may include an azimuthal aperture. The code for correcting the at least one of the formation boundary dip angle and the formation boundary depth corrects both the formation boundary dip angle and the formation boundary depth.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

## BRIEF DESCRIPTION OF THE DRAWING

For a more complete understanding of the present invention, reference is now made to the following descriptions taken in conjunction with the accompanying drawing, in which:

FIGURE 1 shows a portion of a drilling system as may be utilized to collect density data processed according to embodiments of the invention;

FIGURE 2 shows density logs and density image as may result from the density data collected by the drilling system of FIGURE 1;

FIGURES 3A-3C show a schematic diagram of relative dip estimation from a density image;

FIGURE 4 shows an unrolled borehole density graph wherein the shift in height of the sediment bed boundary is represented graphically;

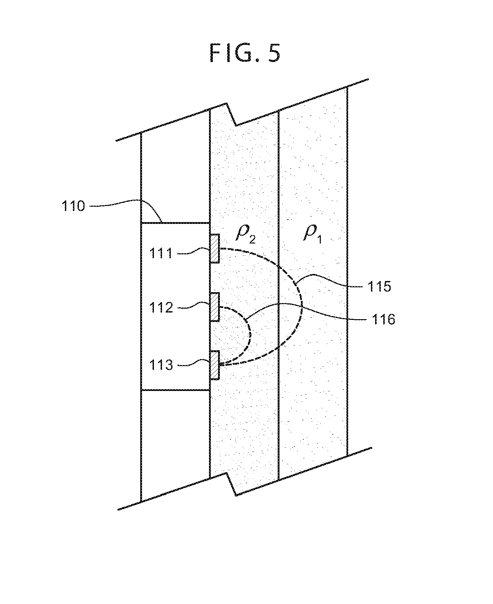

[0023] [0016] FIGURE 5 shows the background density and invading density use in geometric factors analysis;

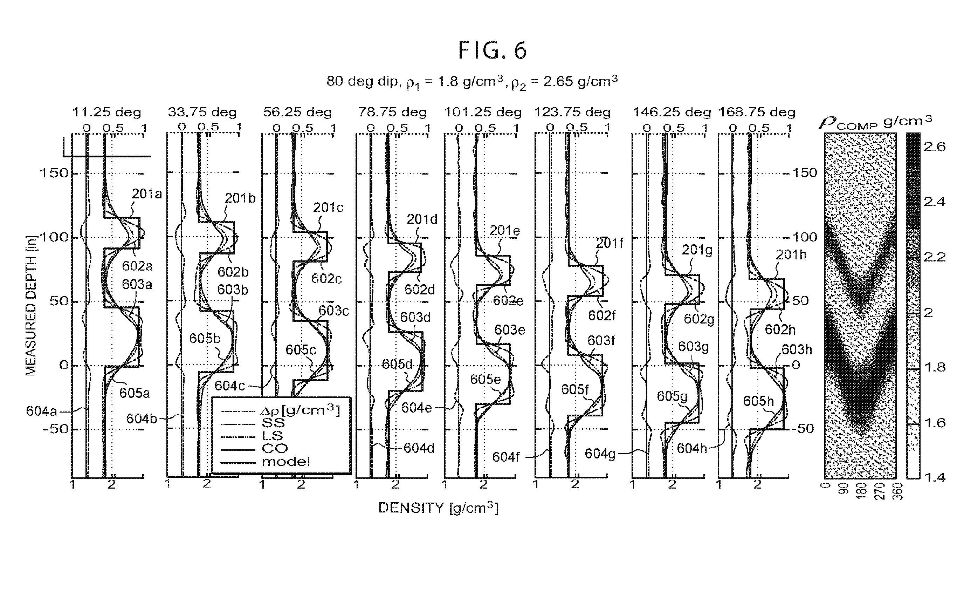

FIGURE 6 shows density log information and density image corrected for the effective depth of investigation and the effective shift in height of the sediment bed boundary dip surface associated with the effective depth of investigation according to an embodiment of the invention;

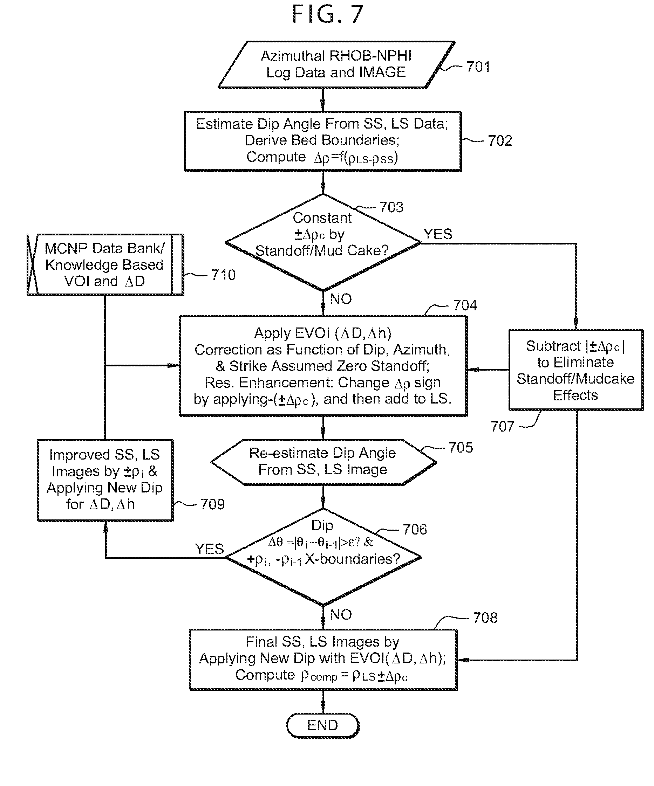

FIGURE 7 shows a flow chart of operation to provide the corrected density log information and density image of FIGURE 6 according to an embodiment of the present invention; and

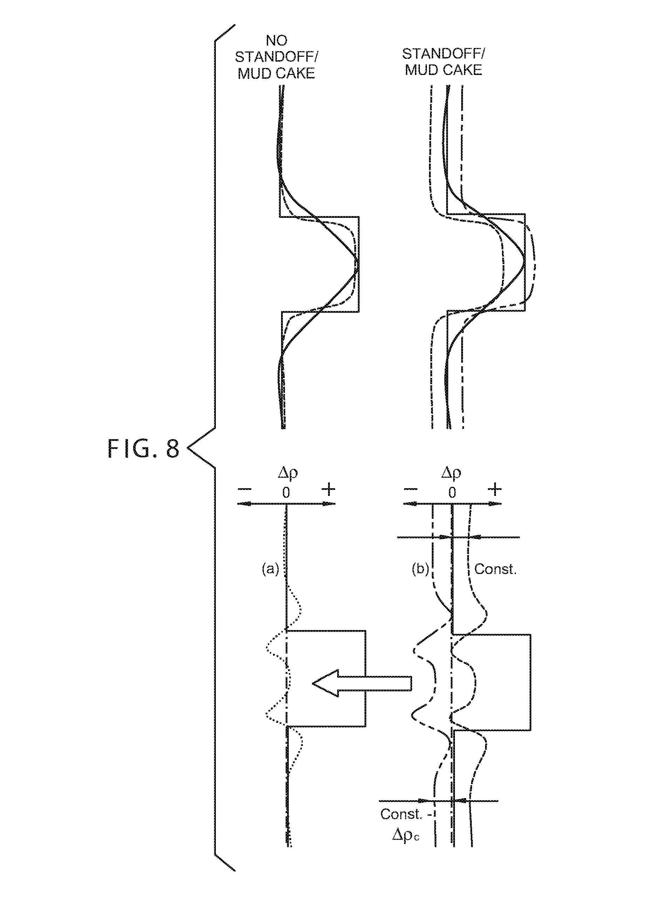

FIGURE 8 shows determination of a standoff or mud cake density constant used in and embodiment of the flow chart of FIGURE 7.

The invention will be described in connection with its preferred embodiments. However, to the extent that the following detailed description is specific to a particular embodiment or a particular use of the invention, this is intended to be illustrative only, and is not to be construed as limiting the scope of the invention. On the contrary, it is intended to cover all alternatives, modifications and equivalents that may be included within the spirit and scope of the invention, as defined by the appended claims.

## DETAILED DESCRIPTION OF THE INVENTION

A brief description of the operation of a typical logging while drilling (LWD) dual detector compensated density tool, and the data collected thereby (i.e., well log data, specifically density log data), is provided in order to aid in understanding the concepts of the present invention. It should be appreciated that the present invention may be utilized with respect to post-processing of data provided by density tools, as well as other tools, other than the exemplary LWD dual detector compensated density tool. For example, embodiments of the present invention may be utilized with respect to wireline tool configurations. Likewise, embodiments of the invention may be utilized with respect to tools providing logging or image data (i.e., well log data) comprising geological strata, density, porosity, composition, etc., and combinations thereof.

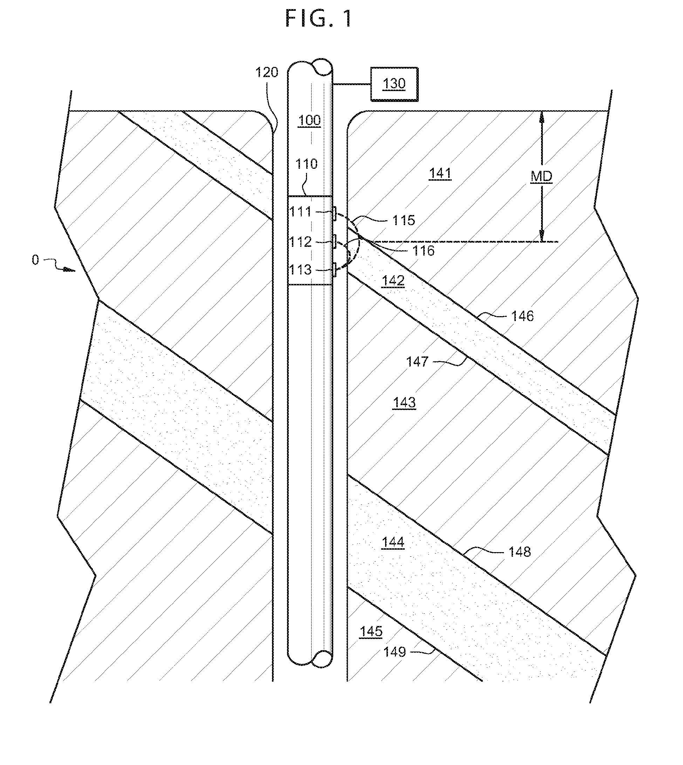

Directing attention to FIGURE 1, a portion of a drilling system as may be used for geological exploration of various formations and structures which exist beneath the Earth's surface and/or to reach mineral deposits, such as hydrocarbon reserves, is shown. The drilling system of FIGURE 1 includes drill stem **100** disposed in borehole **120.** Although not shown in the illustration, drill stem **100** typically comprises a drill bit at a distal end thereof and a drill rig, including a derrick, drawworks, and topdrive, disposed over the drill string in order to provide rotational (drilling) and linear (insertion and extraction) movement to the drill string. It should be appreciated that, although shown having a gap (standoff) between the walls of borehole **120** and the sides of drill string **100** in order to simplify the illustration, there may be no, or substantially no, standoff between the walls of borehole **120** and the sides of drill string **100** in some configurations. Additionally, the gap between the walls of borehole **120** and the sides of drill string **100** may be filled with media, such as "drilling mud" (drilling fluid and proppants).

Drill string **100** of FIGURE 1 includes density tool **110** used for collecting density information with respect to formation **140,** shown as including sediment beds **141-145** separated by respective ones of bed boundaries **146-149.** Sediment beds **141-145** may comprise various formation media, such as sediment beds **141, 143,** and **145** comprising shale and sediment beds **142** and **144** comprising sand. Density tool **110** of the illustrated embodiment comprises a dual detector density tool, and thus includes long space (LS) detector **111,** short space (SS) detector **112,** and source **113.** According to embodiments, source **113** comprises a gamma ray (GR) source. In such an embodiment, LS detector **111** and SS detector **112** comprise GR detectors used to detect gamma rays emitted from source **113** as scattered by formation **140.** The propagation of rays from the source to the detectors is represented in FIGURE 1 by dotted lines **115** and **116** between source **113** and each of LS detector **111** and SS detector **112,** respectively.

In operation, drill string **100,** and thus density tool **110,** is rotated such that a plurality of azimuth "views" are presented to the source and sensors of density tool **110.** For example, drill string **100** may be rotated in 16 steps of 22.5° to provide views into formation **140** centered at 11.25°, 33.75°, 56.25°, 78.75°, 101.25°, 123.75°, 146.25°, 168.75°, 191.25°, 213.75°, 236.25°, 258.75°, 281.25°, 303.75°, 326.25°, and 348.75°. Of course, fewer or more azimuth steps may be used, such as depending upon the aperture provided by density tool **110,** according to embodiments of the invention. Logging equipment **130,** such as may comprise a processor based control system having memory storing an instruction set defining operation as described herein for gathering, storing, and processing information from density tool **110,** may thus be used in combination with density tool **110** to make measurements in a plurality of azimuthally binned sectors (e.g., 16 binned sectors) to produce a density log providing a 360° view around borehole **120** at a particular measurement depth (MD). It should be appreciated that a full 360° view need not be provided, if desired. For example, a 180° view may be provided, wherein the remaining 180° view may or may not be estimated as a mirror image of the view provided.

Formation density values may be estimated as a function of the count rate, e.g., gamma ray count rate (N), provided by each of LS detector **111** and SS detector. In the foregoing example, the SS and LS detector count rates are acquired and binned into 16 equally-spaced angular sectors while the tool string rotates around the borehole. These binned count rates may then be processed to compute the compensated density values in individual sectors.

In traditional density estimation, it is assumed that the formation is infinitely thick (i.e., homogeneous) both horizontally and vertically. Accordingly, techniques such as the widely used $\Delta\rho$ density compensation technique provides compensation for borehole offset at each bin or azimuth view by calculating compensated density ($\rho_{comp}$) as a function of a LS detector density ($\rho_{LS}$) estimate, which is based upon the LS count rate ($N_{LS}$), and a function of the difference between the LS detector density estimate and a SS detector density ($\rho_{SS}$) estimate, which is based upon the SS count rate ($N_{SS}$), this difference being referred to as $\Delta\rho$. These relationships are set forth in the following equations:

$$\Delta\rho = f\left(\rho_{LS} - \rho_{SS}\right) \qquad (1)$$

$$\rho_{comp} = \rho_{LS} + \Delta\rho \qquad (2)$$

The compensated densities calculated for each bin are typically color coded and plotted on a 16-track layout to produce a density image (e.g., an "unrolled" borehole density view of the formation).

As can be appreciated by the ray propagation traces represented in FIGURE 1, the foregoing $\Delta\rho$ density compensation technique may be relied upon to provide a relatively accurate density calculation which is compensated for borehole offset where the formation is substantially homogeneous (e.g., infinitely thick horizontally and vertically) at the measured depth. Density logs provided by such density tools, however, have recently found more applications beyond real time geosteering and completion interval selections, wherein density estimation errors associated with the non-homogeneity of the formation become significant.

In many complex reservoirs density images have begun to be used to estimate bed inclination or dip (e.g., angle from horizontal of bed boundary **144** or bed boundary **145**) and thickness (e.g., thickness of sediment bed **142** as determined by bed boundaries **144** and **145**). However in high angle and horizontal (HA/HZ) wells the current industry practice of constructing density images using SS and LS detector compensated density data and calculating dip information can be problematic. In particular, it has been discovered in arriving at the present invention that investigation volume (the volume of the formation affecting the density measurement) by the density tool, the varying angles between borehole axis and bedding planes, and the bed thickness affect the data collected at the SS and LS detectors differently.

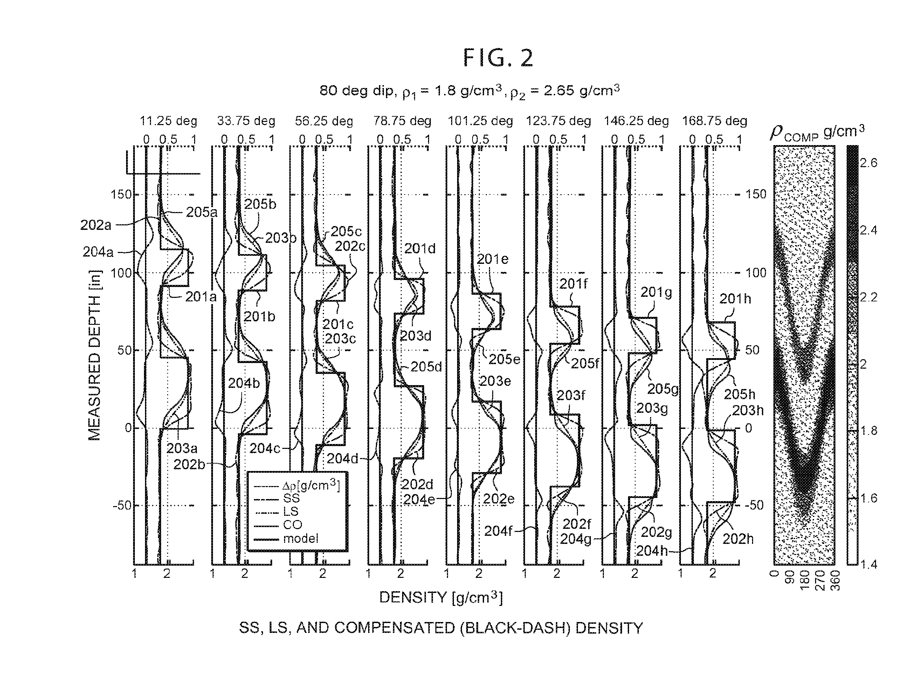

Directing attention to FIGURE 2, Monte Carlo for N particles (MCNP) simulation results of compensated density calculation using equations (1) and (2) above with respect to density log information as may be provided by a density tool such as density tool 110 for a formation presenting sediment beds of alternating media, such as shown in FIGURE 1, disposed in planes having an 80° dip angle well is shown. The simulation of FIGURE 2 is provided without borehole standoff, such that the area for invading density ($\rho_2$) is infinitely small (e.g., there is no mud cake) and thus the background or formation density ($\rho_1$) is measured (i.e, $\Delta\rho$ should be zero everywhere) is shown. The 8 graphs shown from left to right in FIGURE 2 represent the density data at azimuth views starting from 11.25° to 168.75°, in 22.5° increments, at various measured depths. Lines **201a-201h** represent the model density at a respective azimuth view, wherein the rectangular protrusions correspond to the change in density of alternate ones of the simulated sediment beds. Lines **202a-202h** represent the SS density ($\rho_{SS}$) at the respective azimuth view, as determined from the simulated SS count rate ($N_{SS}$). Lines **203a-203h** represent the LS density ($\rho_{LS}$) at the respective azimuth view, as determined from the simulated LS count rate ($N_{LS}$). Lines **204a-204h** represent the calculated density compensation ($\Delta\rho$) at the respective azimuth view, as determined by equation (1). Lines **205a-205h** represent the calculated compensated density ($\rho_{comp}$) at the respective azimuth view, as determined by equation (2). The image shown at the right of FIGURE 2 represents the density image (e.g., an unrolled borehole density view of the formation) generated using the foregoing density data.

The calculated compensated density ($\rho_{comp}$) in FIGURE 2 has significant errors across bed boundaries. Specifically, in the example shown there is significant up-shifted depth responses for $\rho_{LS}$ and ($\rho_{comp}$) from azimuth=11.25° to 101.25°, and down-shifted depth responses for $\rho_{LS}$ and ($\rho_{comp}$) from azimuth=110.25°, 168° azimuth. Thus density images created from such $\rho_{LS}$ and ($\rho_{comp}$) logs will be incorrect. In particular, formation density at particular measured depths will be incorrect and formation geometry will be incorrectly represented.

It has been discovered that erroneous $\Delta\rho$ generation, wherein $\Delta\rho$ calculations result in the wrong signs (i.e., $\Delta\rho$ is negative where it should be positive and vice-versa) across bed boundaries, is due at least in part to the different vertical resolution and depth of investigation between LS detector and the SS detector. This will introduce significant density error when such a compensation process is applied to dual detector density data from HA/HZ wells, as illustrated in the foregoing example.

Embodiments of the present invention provide accurate density information regardless of formation and borehole geometry. Accordingly, accurate density information, and thus accurate density images, may be obtained with respect to high angle and horizontal (HA/HZ) wells, and other wells in which the angle between the normal of the formation plane (e.g., sediment bed) and borehole axis is other than zero (i.e., relative dip between borehole and formation), as well as conventional vertical wells presenting a perpendicular strike angle at the formation boundaries. Additionally, embodiments of the invention provide resolution enhancement with respect to wells having a high relative dip between borehole and formation as well as wells presenting a more perpendicular angle at the formation boundaries.

The measurement point for a source/detector pair (e.g., source **113** and SS detector **112** and source **113** and LS detector **111**) is commonly assumed to be the midpoint between the source and detector. This assumption may provide acceptable results in a vertical well with horizontal bed geometry. However, in HA/HZ wells, the bed boundaries indicated by inflection points of the SS and LS logs appear at an earlier position in depth as the tool azimuth is near zero, and at later position in depth as the tool azimuth is nears 180° when the tool traverses a sediment bed boundary. This is because the density tool does not see the bed boundary at the borehole wall but rather at a depth that is defined by the effective volume of investigation (EVOI). Post-processing of data provided by a density tool, such as density tool **110** of FIGURE 1, is provided according to embodiments of the invention using EVOI analysis to accurately determine formation density and geometry. For example, in providing post-processing of density tool data according to embodiments of the invention, depth boundaries (e.g., measured depth) of formation information provided by a density tool are shifted as a function of azimuth for correcting the spatial positioning of formation features using EVOI information. The resulting density and dip angle estimations are preferably iteratively refined.

The volume of investigation comprises the area viewed or impinging upon the counts provided by the SS and LS detectors, and thus corresponds to the area under corresponding ones of dotted lines **115** and **116.** Accordingly, the EVOI by a dual-detector density tool such as density tool **110** depends on the detector spacing and formation properties, and thus may be estimated as a function of the foregoing. Further, EVOI may be decomposed in terms of the conventional concepts as the radial depth of investigation (RDOI), the vertical resolution (VR), and azimuthal aperture (AA or $\Delta\phi$) related to the binning measurements of the tool (e.g., azimuth aperture of density tool **110**). In a vertical well, RDOI affects the bulk density measurement and VR (equivalently the axial geometric factor) affects the detection of the bed boundaries. However, in a HA/HZ well, both RDOI (equivalently the radial geometric factor) and VR (equivalently the axial geometric factor) affect the density measurements and the detection of the sediment bed boundaries. The higher the sediment bed dip angle is, the more effect from RDOI on both the axial resolution and density estimation.

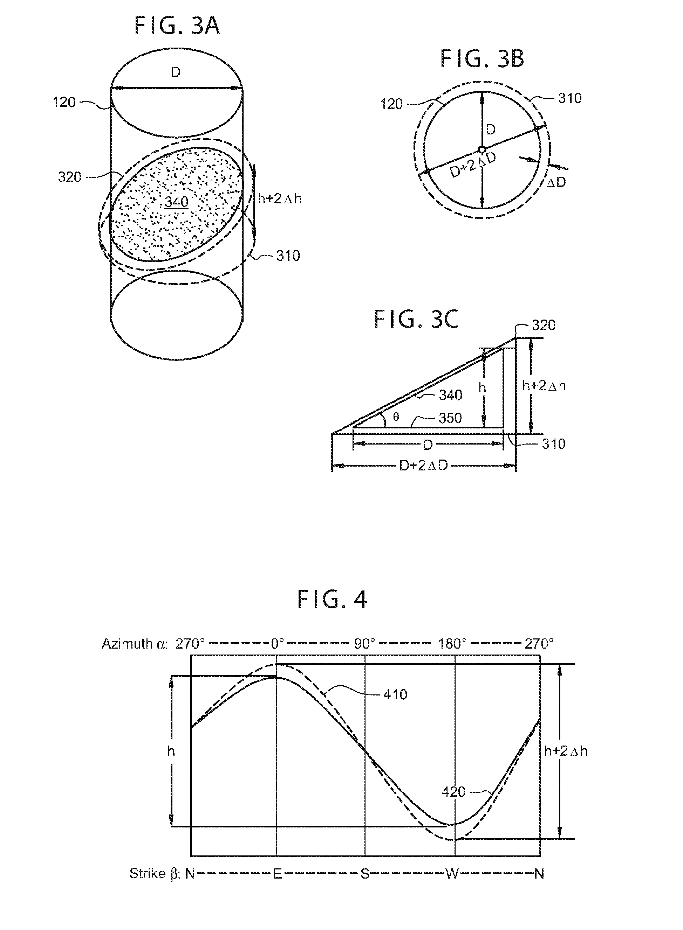

FIGURES 3A-3C help illustrate the concept of EVOI analysis as utilized according to embodiments of the invention. Borehole **120** of FIGURE 1 is represented in FIGURES 3A-3C, wherein plane **340** represents the plane of a sediment bed boundary, such as any of bed boundaries **146-149** shown in FIGURE 1, and plane **350** represents a plane orthogonal to density tool **110,** such as may correspond to a density tool view plane. **Line 310** represents the RDOI of density tool **110.** Although only a single RDOI line is represented in FIGURES 3A-3C for simplification of the figures, it should be appreciated that a different RDOI is associated with each of LS detector **111** and SS detector **112.** Line **320** represents the RDOI of density tool **110** in the plane of the sediment bed boundary. Again, although only a single RDOI line in the plane of the sediment bed boundary is represented in FIGURES 3A and 3C for simplification of the figure, it should be appreciated that a different RDOI in the plane of the bed boundary is associated with each of LS detector **111** and SS detector **112.**

In FIGURES 3A-3C, h is the height of the sediment bed boundary dip surface above the density tool view plane at an associated azimuth view. Accordingly, h corresponds to the height of the sinusoidal line in the density image representing the particular sediment bed boundary. D is the borehole diameter, which is known, and ΔD is the effective depth of investigation, which may be estimated from the tool configuration. Accordingly, as can be seen in FIGURES 3A-3C, Δh is the effective shift in height of the sediment bed boundary dip surface associated with the effective depth of investigation.

The foregoing shift in the height of the sediment bed boundary is represented graphically in the unrolled borehole density graph FIGURE 4, wherein line **410** represents a density image(e.g., $\rho_{SS}$, $\rho_{LS}$, or $\rho_{comp}$) as actually "viewed" by the density tool (i.e., at the RDOI) whereas line **420** represents the density image (e.g., $\rho_{SS}$, $\rho_{LS}$, or $\rho_{comp}$) shifted to the borehole wall (i.e., without RDOI shift as is typical with the assumption that the measurement point for a source/detector pair is the midpoint between the source and detector). The height shift in HA/HZ well is more obvious with respect to $\rho_{LS}$ and $\rho_{comp}$ because ΔD is larger for $\rho_{LS}$ and $\rho_{comp}$ than for $\rho_{SS}$ (as can be appreciated by the EVOIs represented by lines **115** and **116** in FIGURE 1).

Such a shift in the height of the sediment bed boundary dip surface has been found to introduce significant error in the density image as described above with respect to FIGURE 2. Specifically, when the density log (lines **202a-202h, 203a-203h, 204a-204h,** and **205a-205h**) are compared with the density model (lines **201a-201h,** which represent the formation density model and thus are shifted properly as a function of azimuth under the given sediment bed dip), significant errors in depth mismatch due to dip and EVOI can be appreciated.

Hence, ΔD provides a parameter for determining the position in depth where each detector would detect a sediment bed boundary, and thus is used according to embodiments of the invention for sediment bed boundary dip angle estimation.

From the relationships shown in FIGURES 3A-3C, EVOI as utilized according to embodiments of the invention may be decomposed in terms of the RDOI, the VR, and AA (Δφ) as shown below:

$$EVOI \equiv \Delta D^2 \cdot \Delta h \cdot \Delta\varphi \qquad (3)$$

wherein ΔD is a function of the RDOI, Δφ is defined by the density tool aperture, and Δh is a function of the RDOI and VR. Such EVOI unifies the density tool's resolution and defines it in space as function of radial depth of investigation, axial resolution, and azimuthal aperture. The foregoing avoids confusion between the effect of the vertical resolution of a tool in a vertical well and horizontal bed, and the effect of the depth of investigation in HA/HZ well.

A value for EVOI may be estimated as a function of detector spacing and formation properties. Geometric factors (GF) analysis (i.e., axial and/or radial geometric factors) may be utilized in determining the effects of formation properties on EVOI. The geometric factors for a dual-detector density tool, such as density tool **110,** along any particular radius originating at the tool face and radiating therefrom may be determined according to the following:

$$G(r) = (\rho(r) - \rho_1)/(\rho_2 - \rho_1) \qquad (4)$$

In the foregoing equation, $\rho_1$ comprises background density (e.g., formation density) and $\rho_2$ comprises invading density (e.g., standoff or mud cake density) as shown in FIGURE 5, which substantially correspond to $\rho_{SS}$ and $\rho_{LS}$. The foregoing geometric factors are utilized in a measured density based analysis for estimating EVOI. Specifically, it has been found that for background and invading densities in the range of 1.66 to 2.65 g/cc (e.g., mud cake and Earth formation densities typically associated with hydrocarbon exploration) the radial depths at $G(r)$=0.5 are nearly constants, and thus substantially independent of the particular densities experienced. That is, it was determined that the sensitivity of the radial geometric factor $G(r)$ to the formation density contrast is small, and thus the RDOI shows negligible dependence on density variation. Consequently, it was found that the radial depth at $G(r)$=0.5 is equivalent to the industry standard depth of investigation (e.g., 50% of the detector count contribution is from inside of that depth and 50% of the detector count contribution is from outside of that depth). Accordingly, EVOI may be estimated according to embodiments of the invention from the foregoing geometric factors and density information (e.g., using initial density calculations ($\rho_{SS}$, $\rho_{LS}$, and/or $\rho_{comp}$) from the density logs).

A relative sediment bed boundary dip angle estimation ($\theta$), as shown in FIGURE 3C, may be calculated as follows:

$$\theta = \tan^{-1}\left(\frac{h + 2\Delta h}{D + 2\Delta D}\right) \qquad (5)$$

As discussed above, $h$ is the amplitude of the sinusoidal line (e.g., the height of dip surface) from the density image, D is the borehole diameter, $\Delta D$ is the effective depth of investigation which is a function of RDOI, and $\Delta h$ is effective shift height (e.g. depth in MD) of the dip surface boundary. Assuming a small error in $\Delta D$ and $\Delta h$, the error in dip estimation ($\Delta\theta$) can be expressed as:

$$\Delta\theta = \frac{D}{D^2 + h^2}\left(\Delta h + h \cdot \ln D \cdot \Delta D\right) \qquad (6)$$

From the above, the distance between the actual sediment bed boundary location and the sediment bed boundary as provided by the density log, or $\Delta h$, is the effective shift height (e.g. depth in MD) of the dip surface boundary, as shown in FIGURES 3A-3C. The intersection of the idealized effective volume of investigation, as set forth in equation (3), at a given $\Delta D$ with the bed boundary provides a geometrical relation to determine $\Delta h$ for each detector (e.g.,. $\Delta h_{SS}$ and $\Delta h_{LS}$). When the wall of borehole is unrolled to a flat plane as shown in FIGURE 4, the value of $\Delta h$ for each detector can be estimated as a function of the azimuth rotation at a given dip angle by:

$$\Delta h = \Delta D \cos(\alpha + \beta)\tan(\theta). \qquad (7)$$

In the foregoing equation, $\alpha$ is the azimuth of the density tool facing (i.e., the direction of the density tool view), $\beta$ is the strike (i.e., the azimuth of the intersection of the dipping bed with a horizontal plane) of the dipping bed (or deviated borehole), and $\theta$ is the relative dip between borehole and formation bed. From the foregoing, it can be seen that embodiments of the present invention may be utilized to plot sediment bed boundaries as a function of the azimuth.

FIGURE 6 illustrates where $\rho_{LS}$, $\rho_{SS}$, and $\rho_{comp}$ of the example shown in FIGURE 2 have been shifted after having used the foregoing equations to solve for $\Delta h$. Specifically, FIGURE 6 illustrates shifting of $\rho_{LS}$ by $\Delta h_{LS}$ and $\rho_{SS}$ by $\Delta h_{SS}$ such that $\rho_{comp}$ is shifted by an appropriate $\Delta h$. As in FIGURE 2, the 8 graphs shown from left to right in FIGURE 6 represent the density data at azimuth views 11.25°-168.75°, in 22.5° increments, at various measured depths. Lines **201a-201h** represent the model density at a respective azimuth view, wherein the rectangular protrusions correspond to the change in density of alternate ones of the simulated sediment beds. Lines **602a-602h** represent the SS density ($\rho_{SS}$) shifted by $\Delta h_{SS}$. Lines **603a-603h** represent the LS density ($\rho_{LS}$) shifted by $\Delta h_{LS}$.

Comparing lines **604a-604h** of FIGURE 6 (after EVOI analysis correction) with lines **204a-204h** of FIGURE 2 (before correction), the $\Delta\rho$ magnitude is significantly reduced and is consistent through all the azimuthal sectors. As can be appreciated from lines **602a-602h** and **603a-603h** more closely corresponding to the rectangular protrusions of the model density of lines **201a** and **201h** than do lines **202a-202h** and **203a-203h** of FIGURE 2. Likewise, the compensated density $\rho_{comp}$ of lines **605a-605h** calculated from the LS density ($\rho_{LS}$) and SS density ($\rho_{SS}$) shifted by a corresponding shift height ($\Delta h_{LS}$ and $\Delta h_{SS}$) more closely correspond to the rectangular protrusions of the model density of lines **201a-201h** than do lines **205a-205h** of FIGURE 2. Accordingly, the inflection point of the LS and SS logs, as well as the compensated density calculated therefrom, is aligned with the actual sediment bed boundaries, thereby resulting in more accurate formation information regardless of formation and borehole geometry. Moreover, the resulting compensated density sinusoidal image exhibits smaller height (h) after the application of the $\Delta D$ correction which will results in more accurate dip estimation.

Having described concepts of the present invention above, reference is now made to FIGURE 7 wherein a flow diagram providing additional detail of operation according to a preferred embodiment of the present invention is shown. Although in the above examples assumed no standoff or mud cake in order to simply the concepts presented, the embodiment of FIGURE 7 provides compensation both with and without standoff or mud cake.

At block **701** of the embodiment illustrated in FIGURE 7, density tool **110** and logging equipment **130** are utilized to collect azimuthal bulk density log data. This log data may be utilized in generating an initial (uncorrected by $\Delta h$) density image, such as through operation of logging equipment **130** or other processor based system. At block **702** a sediment bed dip angle and sediment bed boundaries are estimated using the raw density log data (e.g., LS and SS data), as described above. Additionally, the illustrated embodiment also computes $\Delta \rho$ from the raw density log data, using equation (1), for use in mitigating the effects of standoff or mud cake.

At block **703** a determination is made as to whether the computed $\Delta \rho$ indicates that a standoff or mud cake is present. For example, where $\Delta \rho$ is a substantially constant positive or negative value throughout an area of the formation which does not traverse a sediment bed boundary (see FIGURE 8), that value of $\Delta \rho$ is likely associated with a standoff or mud cake. If it is determined that there is a standoff or mud cake, the constant value of $\Delta \rho$ associated therewith $\Delta \rho_c$ is subtracted from the SS and LS data (e.g., $\rho_{SS}$ and $\rho_{LS}$) at block **707** to eliminate the effects of the standoff or mud cake and processing proceeds to block **704.** If it is determined that there is not standoff or mud cake, then processing also proceeds to block **704** in the illustrated embodiment.

At block **704,** EVOI analysis of the present invention, utilizing $\Delta D$ and $\Delta h$ as set forth above, provides correction to the SS and LS data as function of relative dip, azimuth, and strike angle. The illustrated embodiment of the invention provides vertical resolution enhancement at block **704** by changing the sign (+/-) of $\Delta \rho$ and adding this value to $\rho_{LS}$. As can be seen by lines **201a** and **203a** and lines **201h** and **203h,** adding $\Delta \rho$ having a changed sign to $\rho_{LS}$ provides measurement depth shift to $\rho_{LS}$.

At block **705,** the sediment bed dip angle is re-estimated from the corrected SS and LS data. Although re-estimation of dip angle from the SS and LS data is shown here as a separate step, it should be appreciated that such re-estimation may be provided as the processing set forth in block **704.**

At block **706** of the illustrated embodiment, a determination is made as to whether further iterations of EVOI analysis and correction should be applied to the density log data. For example, as the data is corrected, iterative improvement in the results diminishes such that further iterations do not provide substantially improved results. Accordingly, embodiments of the invention, wherein an iterative process is utilized, operate to determine if further EVOI analysis iterations are desired. The illustrated embodiment calculates an error in dip estimation ($\Delta \theta$), as shown in equation (6), and compares this error in dip estimation to the difference in estimated dip angle of a current iteration and that of a previous iteration to determine if further iterations should be conducted. If the error in dip estimation is less than or equal to the difference in estimated dip angle of a current iteration and that of a previous iteration, or a predetermined threshold, and the bulk density for those iterations crosses a sediment bed boundary, processing proceeds to block **709** for a further iteration.

At block **709,** the corrected SS and LS data is used to provide an improved density image and new dip angle estimation. Thereafter, processing returns to block **704** for EVOI analysis as described above.

If analysis of the error in dip estimation provided at block **706** does not indicate that further iterations are desired, processing proceeds to block **708** wherein final SS and LS data is used to provide a final improved density image. Where it was determined that standoff or mud cake was present, at block **703,** the compensated density ($\rho_{comp}$) provided at block **708** of the illustrated embodiment is calculated by adding $\Delta \rho_c$, which was subtracted at block **707** to eliminate the effects of standoff or mud cake, to the final corrected $\rho_{LS}$. Accordingly, post-processing of density tool data provided by embodiments of the invention may be used to provide accurate density and resolution enhancement with respect to density tools wherein the tool's sensors are disposed against the borehole (i.e., no standoff is present). Likewise, the foregoing post-processing techniques, adapted to implement a standoff parameter (e.g., a density correction constant, $\Delta \rho_c$), may be utilized to provide accurate density and resolution enhancement with respect to density tools wherein the tool's sensors are disposed away from the borehole (i.e., standoff is present).

As shown above, EVOI based azimuth and dip angle dependent $\Delta D$ and $\Delta h$ correction provided according to embodiments of the invention results in improved compensated density logs and density images for more accurate dip and bed boundaries. Although embodiments have been described herein with reference to embodiments using dual-detector gamma-density tools, the concepts of the invention may be applied to other density tool configurations, such as dual-detector wireline and LWD neutron tools. Similarly, the concepts of the present invention are not limited to dual-detector density tool configurations. For example, the $\Delta D$ and $\Delta h$ correction as shown herein may be applied to single detector images to produce an improved compensated image for a much more accurate estimation of bed boundaries and dip angle. Thus it should be appreciated that the concepts of the present invention may be used with respect to any tools and measurements that encounter depth and measurement point issues due to the EVOI.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

**Claims**

1.  A method comprising:

    estimating a formation boundary depth or a formation boundary dip angle from well log data, said well log data providing formation attribute data for a plurality of azimuth angles, wherein said formation boundary depth is estimated for each of said azimuth angles;
    analyzing effective volume of investigation information to determine an effective depth of investigation ($\Delta D$) and an effective shift in height ($\Delta h$) of a formation boundary surface associated with said formation boundary depth or a formation boundary dip surface associated with said formation boundary dip angle; and
    refining said formation boundary depth estimate or said formation boundary dip angle using at least one of said effective depth of investigation ($\Delta D$) and said effective shift in height ($\Delta h$).

2.  The method of claim 1, wherein said well log data used in estimating said formation boundary depth comprises raw density log data, wherein said raw density log data has not been corrected for formation boundary dip.

3.  The method of claim 1, wherein said analyzing effective volume of investigation information comprises:

    determining an effective volume of investigation value as a function of geometric factors and said well log data.

4.  The method of claim 1, wherein said analyzing effective volume of investigation information comprises:

    decomposing said effective volume of investigation information in terms of a radial depth of investigation, a vertical resolution, and an azimuthal aperture.

5.  The method of claim 1, wherein said refining said formation boundary depth estimate comprises:

    re-estimating said formation boundary depth from corrected well log data, said corrected well log data comprising said well log data having said at least one of said effective depth of investigation ($\Delta D$) and said effective shift in height ($\Delta h$) applied thereto.

6.  The method of claim 1, wherein both formation boundary depth and formation boundary dip angle are estimated, said refining said formation boundary dip angle estimate comprises:

    re-estimating said formation boundary dip angle from corrected well log data, said corrected well log data comprising said well log data having said at least one of said effective depth of investigation ($\Delta D$) and said effective shift in height ($\Delta h$) applied thereto.

7.  The method of claim 1, further comprising:

    subtracting a density correction constant ($\Delta \rho_c$) from said well log data prior to said analyzing said effective volume of investigation information.

8.  The method of claim 7, further comprising:

adding said density correction constant ($\Delta\rho_C$) to corrected well log data prior to providing a final formation boundary depth estimate from said refined formation boundary depth estimate.

9. The method of claim 1, wherein formation boundary dip angle is estimated, the well log data being used in estimating said formation boundary dip angle comprising raw density log data, wherein said raw density log data has not been corrected for formation boundary dip.

## FIG. 1

# FIG. 2

80 deg dip, $\rho_1 = 1.8$ g/cm$^3$, $\rho_2 = 2.65$ g/cm$^3$

SS, LS, AND COMPENSATED (BLACK-DASH) DENSITY

EP 2 113 795 A1

## FIG. 3A

D

120

320

340

h+2Δh

310

## FIG. 3B

120

310

D

D+2ΔD

ΔD

## FIG. 3C

320

340

θ   350

h

h+2Δh

310

D

D+2ΔD

## FIG. 4

Azimuth α: 270° — — — — 0° — — — — 90° — — — 180° — — — 270°

410

h

h+2Δh

420

Strike β: N — — — — E — — — — S — — — — W — — — — N

# FIG. 5

FIG. 6

80 deg dip, $\rho_1$ = 1.8 g/cm³, $\rho_2$ = 2.65 g/cm³

# FIG. 7

Azimuthal RHOB-NPHI Log Data and IMAGE — 701

Estimate Dip Angle From SS, LS Data; Derive Bed Boundaries; Compute $\Delta\rho = f(\rho_{LS} - \rho_{SS})$ — 702

703 — Constant $\pm\Delta\rho_c$ by Standoff/Mud Cake?

YES

NO

MCNP Data Bank/ Knowledge Based VOI and $\Delta D$ — 710

Apply EVOI $(\Delta D, \Delta h)$ Correction as Function of Dip, Azimuth, & Strike Assumed Zero Standoff; Res. Enhancement: Change $\Delta\rho$ sign by applying $-(\pm\Delta\rho_c)$, and then add to LS. — 704

Subtract $|\pm\Delta\rho_c|$ to Eliminate Standoff/Mudcake Effects — 707

Re-estimate Dip Angle From SS, LS Image — 705

Improved SS, LS Images by $\pm\rho_i$ & Applying New Dip for $\Delta D, \Delta h$ — 709

Dip $\Delta\theta = |\theta_i - \theta_{i-1}| > \varepsilon$? & $+\rho_i, -\rho_{i-1}$ X-boundaries? — 706

YES

NO

Final SS, LS Images by Applying New Dip with EVOI$(\Delta D, \Delta h)$; Compute $\rho_{comp} = \rho_{LS} \pm \Delta\rho_c$ — 708

END

FIG. 8

Europäisches
Patentamt
European
Patent Office
Office européen
des brevets

**EUROPEAN SEARCH REPORT**

Application Number

EP 08 15 5355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | UZOH, E.A., MENDOZA, A., TORRES-VERDIN, C., PREEG, W.E., STOCKHAUSEN, E.: "Quantitative studies of relative dip angle and bed-thickness effects on LWD denisty images acquired in high-angle and horizontal wells" SPWLA 48TH ANNUAL LOGGING SYMPOSIUM, 3 June 2007 (2007-06-03), pages 1-16, XP002522673 * page 4, left-hand column, line 27 - right-hand column, line 20 * ----- | 1 | INV. G01V5/10 |
| A | YIN, H., HAN, X., XU, L. , GUI, W. , SHEHATA, A. GARDNER, R. P.: "FIeld and benchmark studies of LWD nuclear tool response in high angle and horizontal wells" SPWLA 47TH ANNUAL LOGGING SYMPOSIUM, 4 June 2006 (2006-06-04), pages 1-16, XP008104940 * page 14, right-hand column, line 1 - page 16, left-hand column, line 6 * ----- | 1 | |
| A | US 2006/131016 A1 (SNOGA IVAN [US]) 22 June 2006 (2006-06-22) * page 4, paragraph 39 - page 5, paragraph 46 * ----- | 1 | TECHNICAL FIELDS SEARCHED (IPC) G01V |
| A | US 2 712 081 A (FEARON, R. E.) 28 June 1955 (1955-06-28) * column 37, line 43 - line 70 * ----- | 1 | |

The present search report has been drawn up for all claims

| Place of search | Date of completion of the search | Examiner |
|---|---|---|
| The Hague | 6 April 2009 | Eberle, Katja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 5355

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2009

| Patent document cited in search report | | Publication date | Patent family member(s) | Publication date |
|---|---|---|---|---|
| US 2006131016 | A1 | 22-06-2006 | NONE | |
| US 2712081 | A | 28-06-1955 | NONE | |

EPO FORM P0459

For more details about this annex : see Official Journal of the European Patent Office, No. 12/82